# EUROPÄISCHE PATENTSCHRIFT

(11) **EP 1 372 303 B1**
(45) Veröffentlichungstag und Bekanntmachung des Hinweises auf die Patenterteilung: **18.04.2007**
(21) Anmeldenummer: 03013501.6
(22) Anmeldetag: 13.06.2003
(51) Int. Cl.: H04L 12/56

(54) **Verfahren zum selektiven Auffinden und Abrufen von in einem Mobilkommunikationsnetz verfügbaren Informationen mittels eines mobilen Endgeräts**
Method for selective finding and querying of information available in a mobile communications network by means of a mobile terminal device
Procédé pour sélectivement trouver et extraire des informations disponibles dans un réseau de communication mobile par moyens d'un terminal mobile

(30) Priorität: 14.06.2002 DE 10226745
(43) Veröffentlichungstag der Anmeldung: 17.12.2003
(73) Patentinhaber: T-Mobile Deutschland GmbH, 53227 Bonn (DE)
(72) Erfinder: Reischmann, Klaus, Dipl.-Ing., 53229 Bonn (DE)
(74) Vertreter: Riebling, Peter

(56) Entgegenhaltungen:
- EP-A- 1 156 650
- EP-A- 1 182 892
- WO-A-98/47270
- US-B1- 6 321 257
- ARNOLD-MOORE T ET AL: "Architecture of a content management server for XML document applications" WEB INFORMATION SYSTEMS ENGINEERING, 2000. PROCEEDINGS OF THE FIRST INTERNATIONAL CONFERENCE ON HONG KONG, CHINA 19-21 JUNE 2000, LOS ALAMITOS, CA, USA,IEEE COMPUT. SOC, US, 19. Juni 2000 (2000-06-19), Seiten 97-108, XP010521842 ISBN: 0-7695-0577-5

## Beschreibung

Die Erfindung betrifft ein Verfahren zum selektiven Auffinden und Abrufen von in einem Mobilkommunikationsnetz verfügbaren Informationen mittels eines mobilen Endgeräts.

Bei der Informationsverwaltung besteht seit jeher das Problem, abgelegte Informationen, die einen Datenbestand bilden, bei Bedarf zu finden, insbesondere wenn verschiedene Personen auf den Datenbestand Zugriff haben.

Um Informationen für das Wiederauffinden aufzubereiten, sind zahlreiche Verfahren bekannt. Eine einfache Möglichkeit ist die Strukturierung der Informationen in Menübäumen oder Verzeichnissen. Eine andere Möglichkeit besteht in der Verschlagwortung oder Indizierung der Informationen, was sowohl automatisch als auch manuell vorgenommen werden kann. Die oben beschriebenen Verfahren eignen sich sehr gut für kleinere Informationsbestände, stoßen jedoch bei größeren Informationsumfängen schnell an ihre Grenzen. Zudem sind diese Verfahren zur Informationssuche mittels breit und tief geschachtelter Menüstrukturen unübersichtlich und wenig nutzerfreundlich, insbesondere für einen mobilen Nutzer.

Computer erleichtern das Auffinden abgelegter Informationen durch virtuelle Maschinen, den sogenannten Suchmaschinen, die die abgelegten Informationen auf das Erfüllen bestimmter Suchkriterien, die üblicherweise in einer Suchanfrage von der die Informationen suchenden Person vorgegeben werden, durchsuchen. Alle diese Informationen sind in der Regel in Form von Dateien gespeichert, die einen Namen und eine den Ort, an dem die Datei gespeichert ist, bezeichnende Adresse besitzen, so dass das Abrufen der Datei auch von entfernten Stellen z. B. über das Internet oder ein mobiles Kommunikationsendgerät möglich ist, wenn der Speicherort und die abrufende Stelle über entsprechende Kommunikationsverbindungen miteinander gekoppelt sind.

Zur Suche in kleinen und großen Datenbeständen wurden die unterschiedlichsten Suchmaschinen entwickelt, die in einfachster Form auf praktisch jedem PersonalComputer (im folgenden kurz PC genannt) installiert sind und dort beim Durchsuchen z. B. einer Festplatte helfen. Ungleich komplexere Suchmaschinen sind dagegen die sogenannten Metasuchmaschinen, die verschiedenste Suchmaschinen bei Suchanfragen in äußerst komplexen Datenbeständen wie dem über das Internet verfügbaren Datenbestand zusammenwirken.

Die aus Computersystemen bekannten Suchmaschinen können nicht ohne weiteres auf die Anwendung in einem mobilen Umfeld, also im Kontext eines sich zeitweise bewegenden Nutzers übertragen werden. Mobilkommunikationssysteme sind bandbegrenzte Übertragungssysteme, das heißt die in einem bestimmten Zeitabschnitt übertragbare Datenmenge ist wesentlich kleiner als z.B. bei Internetanwendungen. Ferner besitzen die mobilen Endgeräte meist größenbegrenzte Anzeigeeinrichtungen und funktionsbegrenzte Eingabe-Prozeduren/ -Tastaturen, die z. B. mit den komfortablen Eingabe und Ausgabeeinheiten eines PC's nicht zu vergleichen sind.

Beim Auffinden und Abrufen von in einem Mobilkommunikationsnetz verfügbaren Informationen mittels eines mobilen Endgeräts mangelt es im wesentlichen an zwei, für die Nutzerfreundlichkeit entscheidenden Punkten. Zum einen an einem Find-Algorithmus mit hoher Treffergenauigkeit und zum anderen an einer einfachen Eingabe-Prozedur, die universell für unterschiedliche Applikationen benutzt werden kann.

Die WO 98/47270 A2 offenbart im Einklang mit den Merkmalen des Oberbegriffs des Anspruchs 1, ein Verfahren zum Auffinden und Abrufen von in einem Mobilkommunikationsnetz verfügbaren Informationen mittels eines mobilen Endgeräts anhand einzugebender Suchbegriffe, wobei die Suchbegriffe über eine Eingabeeinheit des mobilen Endgeräts eingegeben werden und vom mobilen Endgerät an ein Netzelement des Mobilkommunikationsnetzes übermittel werden. Die ermittelten Treffer werden im Netzelement in Form von Kurznachrichten aufbereitet und an das mobile Endgerät übertragen, wo sie wahlweise abrufbar und auf einer Anzeigeinrichtung darstellbar sind.

Der Artikel Architecture of a content management server for XML document applications", WEB INFORMATION SYSTEMS ENGINEERING, 2000; PROCEE-DINGS OF THE FIRST INTERNATIONAL CONFERENCE IN HONG KONG, CHINA, 19-21 JUNE 2000, LOS ALAMITOS, CA, USA IEEE COMPUT. SOC., US, 19. Juni 2000, Seiten 97 bis 108, XP010521842; T. ARNOLD-MOORE et al. beschreibt ein Datenmodell für ein content management und insbesondere auch Verfahren zum Indizieren und Abfragen der Daten anhand von Stichwörtern, die entsprechend miteinander verknüpft werden können. Unter anderem wird hier von abgestuften Sucheingaben gesprochen, was bedeutet, dass verschiedene Suchwörter miteinander verknüpft werden können. Eine derartige Suchstrategie ist jedoch für den Einsatz bei mobilen Endgeräten nicht sonderlich gut geeignet, da sie komplexere Eingaben erfordert, die bei mobilen Endgeräten nur umständlich einzugeben sind.

Die Aufgabe der Erfindung besteht darin, ein Verfahren zum Auffinden und Abrufen von in einem Mobilkommunikationsnetz verfügbaren Informationen mittels eines mobilen Endgeräts anzugeben, das eine verbesserte Nutzerfreundlichkeit aufweist.

Die Lösung dieser Aufgabe erfolgt erfindungsgemäß durch die im Patentanspruch 1 angegebenen Merkmale.

Der Find-Algorithmus und die Eingabe-Prozedur sorgen für eine nach Relevanz sortierte Trefferliste und eine auf nur wenigen, leicht memorierbaren Regeln, aufgebaute Eingabe-Prozedur.

Vorteilhafte Ausgestaltungen und Weiterbildungen der Erfindung sind in den abhängigen Patentansprüchen angegeben.

### Der Find-Algorithmus:

Ein wichtiges Merkmal der Erfindung ist, dass die Reihenfolge und Schreibweise der Suchbegriffe die Relevanz-Bewertung der Treffer beeinflussen.

Durch diese Art der prioritätsrelevanten Suche können auch Treffer im thematischen Kontext der Suchbegriffe gefunden werden.

Durch Verwendung eines intelligenten Suchalgorithmus können ferner Treffer mit anderer als der eingegebenen Schreibweise gefunden werden.

### Die Eingabe-Prozedur:

Damit ein bestmögliches Suchergebnis erzielt wird, sollte der Benutzer die Suchbegriffe in möglichst korrekter Schreibweise an der Eingabeeinheit seines mobile Endgeräts eingeben.

Erfindungsgemäß sind die Suchbegriffe in der Reihenfolge ihrer Wichtigkeit, vorzugsweise der Wichtigste zuerst, am mobilen Endgerät einzugeben.
Die Suchbegriffe werden einfach aneinandergereiht eingegeben, wobei sie untereinander durch ein Listentrennzeichen das heißt ein in Texten wenig oder nie vorkommendes Zeichen, z.B. "Leerzeichen", getrennt werden.

Mit einem Wildcard-Zeichen, z. B. ,* ', können auch Informationen gefunden werden, die aus Suchbegriffen und weiteren Zeichen bestehen, über einen eingegebenen Suchbegriff z.B. ,Jan' werden Treffer ermittelt, die die Begriffe Jan, Jansen, Jannsen, Janosch etc., enthalten.

Die Wirkungsweise der Erfindung wird am Beispiel des "T-D1 Special" -Dienstes der Mobilfunknetzbetreibers T-Mobile Deutschland GmbH beschrieben:

Der Nutzer sucht nach neuesten Meldungen über Jan Ullrich, z.B. während der Tour de France, und den Radsport.
Er schreibt eine Kurznachricht (SMS) mit z. B. folgendem Text, der die vom Nutzer gewählten, nach Wichtigkeit geordneten Suchbegriffe enthält:
a. Ullrich
b. Jan+Rad
c. Radsport
d. Jan+Sport

Die SMS mit den Suchbegriffen wird vom mobilen Endgerät an einen an das Mobilkommunikationsnetz angebundenen Server übertragen. Der Server kann dabei über eine herkömmliche Rufnummer angewählt werden.

Im Server wird die SMS ausgewertet und eine Relevanzbewertung der verfügbaren Informationen in Abhängigkeit der Reihenfolge und Schreibweise der Suchbegriffe durchgeführt. Die ermittelten Treffer werden im Server in Form von Kurznachrichten SMS aufbereitet und an das mobile Endgerät übertragen. Vom Server erhält der Nutzer die Treffer in Blöcken zu je 160 Zeichen als Kurznachricht (SMS) übermittelt, die der Nutzer Block für Block abrufen kann.

In ähnlicher Weise kann nach Filmbeginnzeiten von Kinos, Nachrichten, Tipps, Auskünften (Telefon, Adressen), freien Parkplätzen, Gelbe-Seiten-Informationen u.v.a. gesucht werden, ohne dass der Nutzer dabei jeweils eine andere Eingabe-Prozedur erlernen müsste.

Erfindungsgemäß können nicht nur herkömmliche Kurznachrichten SMS für die Informationsübertragung verwendet werden, sondern auch die Nachfolgedienste EMS (Enhanced Messaging Service) und MMS (Multimedia Messaging Service), die eine Übermittlung von Audio-, Grafik-, Text- und Bildinhalten erlauben und deren Nachrichtenumfang nicht mehr auf 160 Zeichen begrenzt ist.

## Patentansprüche

1. Verfahren zum Auffinden und Abrufen von in einem Mobilkommunikationsnetz verfügbaren Informationen mittels eines mobilen Endgeräts anhand einzugebender Suchbegriffe, wobei die Suchbegriffe über eine Eingabeeinheit des mobilen Endgeräts eingegeben werden und vom mobilen Endgerät an ein Netzelement des Mobilkommunikationsnetzes übermittelt werden, und die ermittelten Treffer im Netzelement in Form von Kurznachrichten SMS aufbereitet und an das mobile Endgerät übertragen werden, wo sie wahlweise abrufbar und auf einer Anzeigeeinrichtung darstellbar sind, **dadurch gekennzeichnet, dass** die Suchbegriffe in der Reihenfolge ihrer Wichtigkeit eingegeben werden, und im Netzelement eine Relevanzbewertung der verfügbaren Informationen in Abhängigkeit der Reihenfolge und Schreibweise der Suchbegriffe durchgeführt wird, wobei die Treffer in Datenblöcken vom Netzelement an das mobile Endgerät übermittelt werden und dort Block für Block abrufbar sind.

2. Verfahren nach Anspruch 1, **dadurch gekennzeichnet, dass** die Übermittlung der Suchbegriffe vom mobilen Endgerät zum Netzelement per Kurznachricht erfolgt.

3. Verfahren nach einem der vorhergehenden Ansprüche, **dadurch gekennzeichnet, dass** die Suchbegriffe aneinandergereiht eingegeben, wobei sie untereinander durch ein Listentrennzeichen getrennt werden.

4. Verfahren nach einem der vorhergehenden Ansprüche, **dadurch gekennzeichnet, dass** mit einem Wildcard-Zeichen auch Informationen gefunden werden, die aus Suchbegriffen und weiteren Zeichen bestehen.

5. Verfahren nach einem der vorhergehenden Ansprüche, **dadurch gekennzeichnet, dass** als Mobilkommunikationsnetz ein GSM-Mobilkommunikationsnetz verwendet wird.

6. Verfahren nach einem der vorhergehenden Ansprüche, **dadurch gekennzeichnet, dass** als Netzelemente ein an das Mobilkommunikationsnetz angebundener Server verwendet wird.

7. Verfahren nach einem der vorhergehenden Ansprüche, **dadurch gekennzeichnet, dass** Kurznachrichten in Form von EMS oder MMS verwendet werden.

## Claims

1. Method for locating and retrieving items if information available in a mobile communications network by means of a mobile terminal device on the basis of search terms to be entered, wherein the search terms are entered via an input unit of the mobile terminal device and are transmitted by the mobile terminal device to a network element of the mobile communications network and the hits determined in the network element are prepared in the form of SMS short messages and transmitted to the mobile terminal device where they are selectively retrievable and presentable on a display device, **characterised in that** the search terms are entered in the sequence of their importance and in the network element a relevance evaluation of the available items of information is carried out as a function of the sequence and spelling of the search terms, wherein the hits are transmitted in data blocks by the network element to the mobile terminal device where they are retrievable block by block.

2. Method according to claim 1, **characterised in that** the transmission of the search terms from the mobile terminal device to the network element ensues by short message.

3. Method according to any of the preceding claims, **characterised in that** the search terms are entered consecutively, wherein they are separated from one another by a list delimiter symbol.

4. Method according to any of the preceding claims, **characterised in that** by means of a wild card symbol items of information consisting of search terms and other characters are also found.

5. Method according to any of the preceding claims, **characterised in that** for the mobile communications network a GSM mobile communications network is used.

6. Method according to any of the preceding claims, **characterised in that** for the network elements a server linked to the mobile communications network is used.

7. Method according to any of the preceding claims, **characterised in that** short messages in the form of EMS or MMS are used.

## Revendications

1. Procédé pour trouver et appeler des informations disponibles dans un réseau de communication mobile à l'aide d'un terminal mobile, au moyen de termes de recherche à entrer, les termes de recherche étant entrés par l'intermédiaire d'une unité d'entrée du terminal mobile et étant transmises par le terminal mobile à un élément de réseau du réseau de communication mobile, et les réponses pertinentes trouvées étant traitées dans l'élément de réseau sous la forme de messages courts SMS et transmis au terminal mobile, où elles peuvent être sélectivement appelées et visualisées sur le dispositif d'affichage,
**caractérisé en ce que** les termes de recherche sont entrés par ordre d'importance, et une évaluation de pertinence des informations disponibles est effectuée dans l'élément de réseau en fonction de l'ordre et de la notation des termes de recherche, les réponses pertinentes étant transférées en blocs de données de l'élément de réseau vers le terminal mobile et aptes à être appelées dans celui-ci bloc par bloc.

2. Procédé selon la revendication 1, **caractérisé en ce que** la transmission des termes de recherche du terminal mobile vers l'élément de réseau se fait par message court.

3. Procédé selon l'une des revendications précédentes, **caractérisé en ce que** les termes de recherche sont entrés alignés, étant précisé qu'ils sont séparés les uns des autres par un signe de séparation de listes.

4. Procédé selon l'une des revendications précédentes, **caractérisé en ce qu'**avec un signe joker, on trouve aussi des informations qui se composent de termes de recherche et d'autres signes.

5. Procédé selon l'une des revendications précédentes, **caractérisé en ce qu'**on utilise comme réseau de communication mobile un réseau de communication mobile GSM.

6. Procédé selon l'une des revendications précédentes, **caractérisé en ce qu'**on utilise comme éléments de réseau un serveur relié au réseau de communication mobile.

7. Procédé selon l'une des revendications précédentes, **caractérisé en ce que** les messages courts sont utilisés sous la forme d'EMS ou de MMS.
